# EUROPEAN PATENT SPECIFICATION

(11) **EP 2 409 858 B1**
(45) Date of publication and mention of the grant of the patent: **28.08.2013**
(21) Application number: 11006464.9
(22) Date of filing: 24.07.2007
(51) Int. Cl.: B60C 11/00, B60C 11/11

(54) **Method for designing the fundamental pitch for a tire tread pattern with variable lug count by rib**
Verfahren zum Konzipieren des Grund-Pitch für ein Reifenprofil mit variabler Stollenzahl pro Rippe
Procédé de conception du pas fondamental pour la sculpture de la bande de roulement d'un pneu avec nombre variable de barettes par nervure

(30) Priority: 17.10.2006 US 852220 P
(43) Date of publication of application: 25.01.2012
(62) Divisional of application: 07810756.2
(73) Proprietor: Bridgestone Americas Tire Operations, LLC, Nashville, TN 37214 (US)
(72) Inventor: Stuckey, Jon, Louisville OH 44641 (US); Dumigan, Keith, Akron OH 44313 (US); Zemla, David, Canal Fulton OH 44614 (US)
(74) Representative: Banzer, Hans-Jörg

(56) References cited:
- EP-A1- 1 431 077
- GB-A- 2 313 814
- JP-A- 63 125 411
- JP-A- 63 159 110

## Description

### BACKGROUND OF THE INVENTION

### 1. TECHNICAL FIELD

The present invention generally relates to tires and methods for designing tire tread patterns to improve the tire noise attributed to the pitch sequence. More particularly, the present invention relates to tire tread patterns and methods for designing the fundamental pitch of a tread pattern having multiple rib groupings with different numbers of lugs in different rib groupings.

### 2. BACKGROUND INFORMATION

One aspect of tire design involves minimizing undesirable tire noise. Tire noise is generated when the lugs of the tread pattern contact the road surface. An unvarying tread pattern, or mono pitch tread pattern, creates an undesirable tonal, or mono pitch sound. Tire designers vary the tread pattern to avoid mono pitch sounds. The tread patterns are typically varied by altering the size of the tread pitches around the circumference of the tire. Varying the sizes of the tread pitches to create a pitch sequence tends to reduce mono pitch tire noise by broadening the frequency domain of the noise spectrum but undesirable noise in the time domain can still be created. Tire tread designers desire a pitch sequence that provides the tire with desirable performance characteristics while also minimizing undesirable tire noise.

Tread patterns are currently analyzed by comparing the tire noise generated by different variations in the tread pitches. Known analysis techniques allow the tire designer to select a pitch sequence for the tread design that generates acceptable tire noise. One such analysis technique uses the Fourier spectrum of the pitch sequence to identify concentrations of frequencies that that are known to be objectionable. Another technique disclosed in US Patent 6,112,167 analyzes portions of the pitch sequence around the circumference of the tire.

A problem facing tire tread designers is the growing popularity of asymmetric tread designs for multi-purpose tires. Asymmetric tires may be designed with one side of the tire optimized for dry traction and long wear while the other side of the tire is optimized for wet traction and water dispersal. Asymmetric tread patterns typically have different tread patterns on different sides of the tire and may thus have different numbers of lugs on the different circumferential ribs of the tire. A fundamental pitch that provides desirable tire noise for one rib grouping may yield undesirable tire noise from another rib grouping. Design methodologies do not provide a mechanism for analyzing the different pitch sequences incorporated into asymmetric tires. Tire designers thus desire an improved analysis and design technique for use with tire tread patterns having multiple ribs with different pitch sequences. Tire users desire a multiple 20 rib tire having different numbers of lugs per rib while also-having-minimized undesirable tire noise attributed to the pitch sequence.

This problem is not limited to asymmetric tire tread patterns.

Conventionally, for symmetric tire tread patterns, a designer either had the option of designing the same number of lugs in each circumferential rib, or rib grouping, or could sub-divide a lug in any given rib or rib grouping. In the first case, the ratio of the number of lugs in all circumferential ribs is 1:1. In the second case the ratio is 1:2, a 100% increase in one or more circumferential ribs. In order to tune tire performance for good and poor weather conditions, the tire designer requires the flexibility to have a smaller differential of the number of lugs in the center portion of the pattern to the shoulder portion in order to balance performance. For example, a designer may wish the center to have 25% more lugs than the shoulder to provide for better inclement weather performance while maintain good weather performance with the shoulder lugs. Thus the designer would wish for a 1:1.25 or 4:5 ratio of the number of lugs in one rib or rib grouping, to another rib or rib grouping. This bias ratio could therefore be equatorially symmetric as per a center versus shoulder bias, equatorially asymmetric as per a inboard versus outboard bias. If there are more than two circumferential ribs or rib groupings, a designer may also wish to have a different bias for each, further tuning the tire tread pattern design.

GB 2 313 814 A discloses a low noise tire tread having a tire tread pattern comprising only one circumferentially-disposed rib grouping. A fundamental pitch of the tire tread pattern is repeated about the circumference of the tire tread pattern. JP 63159110 discloses another relevant tire tread pattern.

### BRIEF SUMMARY OF THE INVENTION

The present invention provides a method for designing a fundamental pitch for a tire tread pattern as defined in independent claim 1 and a pneumatic tire as defined in claim 10. The dependent claims define preferred and advantageous embodiments of the invention.

The tire of the invention may be provided in symmetric and asymmetric configurations.

### BRIEF DESCRIPTION OF THE SEVERAL VIEWS OF THE DRAWINGS

FIG. 1 is a schematic view of exemplary four rib tread design elements (the tread geometry being generic) wherein one sub-pitch is disposed in each pitch with two different sizes (large and small) of sub-pitches.
FIG. 2 is a schematic view of the first sixteen pitches of a pitch sequence using the FIG. 1 four rib tread design elements.
FIG. 3 is a schematic view of exemplary four rib tread design elements (the tread geometry being generic) wherein two sub-pitches are disposed in each pitch with two different sizes (large and small) of each sub-pitch.
FIG. 4 is a schematic view of the first eight pitches of a pitch sequence using the FIG. 3 four rib tread design elements.
FIG. 5 is a chart showing a variety of D values.
FIG. 6 is a chart showing an exemplary set of S values applied to a tire pitch sequence with a D ratio of 4:3 or 1.33.
Figs. 7 and 8 are examples of a tread patterns designed for different goals. FIG. 7 is designed for wear and good weather because it has fewer lugs. FIG. 8 is designed for inclement weather and noise performance because it has more lugs.
FIG. 9 is an example of a tread pattern using portions of the tread designs from Figs. 7 and 8.
FIG. 10 is another exemplary tread with 1 sub-pitch per pitch.
FIG. 11 depicts 6 sub sections that are used to form the tread pattern of FIG. 12.
FIG. 12 is an example of a tire tread pattern using the 6 sub sections depicted in FIG. 11.
FIG. 13 shows the predicted noise frequency distribution of 3 patterns.
FIG. 14 is a chart of the modeled noise.
FIG. 15 is a chart of predicted tire performance.
FIG. 16 is a design chart showing desirable numbers of lugs for numbers of fundamental pitch and numbers of sub-pitches.

Similar references numbers and letters refer to similar parts throughout the specification.

### DETAILED DESCRIPTION OF THE INVENTION

The method of the present invention is used to design pneumatic tire tread patterns that have a plurality of circumferential, load supporting elements or lugs arranged in circumferential bands or ribs. Bands or ribs with the same number of lugs are considered together as a rib grouping. Although they frequently are adjacent, the bands or ribs in a rib grouping may be spaced apart by other bands or ribs and do not need to be adjacent. A rib grouping may include a single rib of circumferential lugs or a plurality of ribs of circumferential lugs. Although the invention may be applied to a wider variety of designs, the examples discussed below focus on tread designs having 20 to 160 lugs disposed in 1 to 7 rib groupings. This rib grouping range is based on the fact that most tires desired in the market have tire tread circumferences in a range from about 1680 mm to 3200 mm. Most lugs used with these tires have a circumferential length of between 20 mm to 75 mm thus yielding a range of about 22 to 84 lugs in a small tire and 43 to 160 lugs in a larger tire. When manufacturing criteria, tire wear criteria, and tire noise criteria are considered, most commercially produced tires include 40 to 80 lugs. The method of the invention is thus described for use with tire tread patterns in this range. The method may also be used for tires that fall outside this range by applying the steps for the range of lugs outside this range.

For each tread design in a tire, there is a number "x" of rib groupings R of circumferentially disposed lugs L. Tire tread patterns created according to the method of the present invention will have integer combinations of sub-pitches S that form fundamental pitches P within each rib grouping R. The fundamental pitch is defined as a portion of tire tread beginning at a common boundary (in the tread design) and ending at a common boundary (in the tread design) in which the greatest common factor of the number of lugs by ribs for each of the ribs contained within the fundamental pitch is one. The fundamental pitch repeats "k" times within a rib grouping about the circumference of the tire. A sub-pitch is a portion of tread geometry within a fundamental pitch P. There are "m" sub-pitches S that can be individually scaled within a fundamental pitch P.

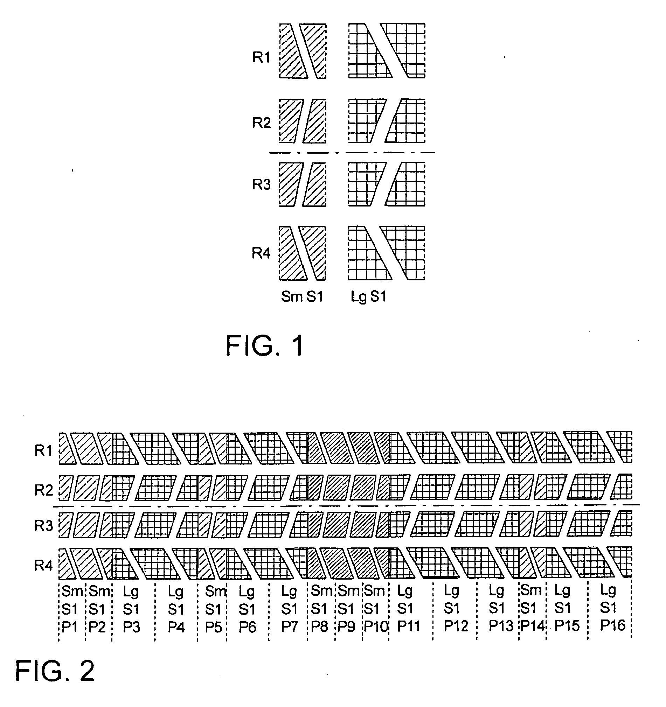

Within any given rib grouping R, the total number "y" of lugs L may be determined by the lug equation: y_{R} = k*m_{R}. When there is only one sub-pitch S within each fundamental pitch P (referred to as a single unit design), the total number y of lugs L in each rib grouping R equals the number of fundamental pitches P. When there are two sub-pitches S within each fundamental pitch P, then the total number y of lugs L in each rib grouping R equals twice the number k of fundamental pitches P. These two examples are illustrated in Figs. 1-4.

In order to illustrate a single unit design, exemplary four rib R tread pattern elements are shown in FIG. 1 wherein there is only one sub-pitch S per pitch P with the sub-pitches being either small (Sm) or large (Lg). In this example, each rib grouping includes a single rib. The geometry of the tread pattern shown in these drawings is schematic, generic, and exemplary. This invention may be applied to a wide variety of lug geometries. Any of a wide variety of tread patterns may be used. For example, a small sub-pitch (Sm) may have a length of 25 mm and a large sub-pitch (Lg) may have a length of 40 mm. A sample pitch sequence may be [25, 25, 40, 40, 25, 40, 40, 25, 25, 25, 40, 40, 40, 25, 40, 40, ...]. FIG. 2 schematically depicts the tread elements of FIG. 1 applied in this pitch sequence.

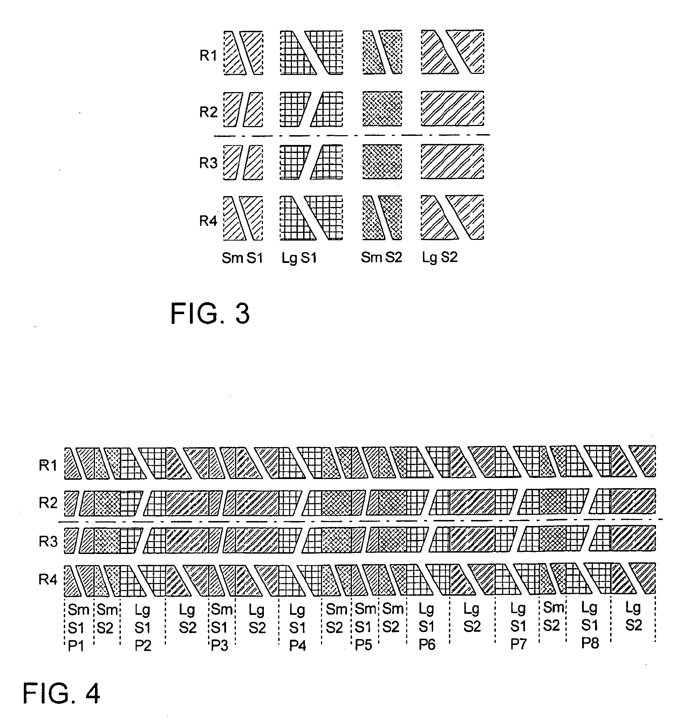

In order to illustrate a double unit design, exemplary four rib R tread pattern elements are shown in FIG. 3. FIG. 3 shows that the first sub-pitch (S1) has the same geometry as the example discussed above with reference to FIG. 1 while the second sub-pitch (S2) has a different geometry (the lateral slot has been removed from ribs R2 and R3). FIG. 3 depicts both large (Lg) and small (Sm) lengths for the sub-pitches. FIG. 4 schematically depicts the tread elements of FIG. 3 applied to the sample pitch sequence set forth above [25, 25, 40, 40, 25, 40, 40, 25, 25, 25, 40, 40, 40, 25, 40, 40,...]. In this example, each pitch P includes S1 and S2 (with the size-of S1 and S2 following the sample pitch sequence) and the different ribs R have different numbers of lugs L. R1 and R4 have twice the lugs of R2 and R3. The particular distribution of lugs L in this example is irrelevant to the invention and R1 and R2 could have twice the lugs of R3 and R4 or R2 and R3 could have twice the lugs L as R1 and R4.

In order to analyze the different tire noises caused by the different number of lugs in each rib, a rib differential D is determined by the formula: D=(Maximum Number of Lugs in any rib grouping) / (Minimum Number of Lugs in any rib grouping). The rib differential (D) provides a ratio representing the number of noise causing events in the highest lug rib compared to the number of noise causing events in the lowest lug rib. In the first example of FIG. 2, D=1 and in the second example of FIG. 4, D=2. Tread designs having a D>2 are possible but have been found to yield undesirable properties because these designs have undesirably large differences in lug stiffnesses. Tread designs with a D of exactly 2 are also undesirable because the maximum tread passage frequency will be a multiple of the minimum tread passage frequency causing an undesirable amplitude spike at this frequency. The tread passage frequency F is defined as: F=V*y/C where V represents tire ground velocity and C represents tire circumference. As the tire rotates, each lug will impact the road surface and will thus act as an impulse. There are thus multiple frequencies that are integer multiples of the principal frequency. These frequencies are determined by Fⱼ=j*(V*y/C) where j=1,2,3, .... A tire designer does not want to have any of the first three frequencies of one rib to match the first three frequencies of a rib having a different number of lugs. This will happen when D=1, 2.0, or 1.5. Tire tread designs having a D between 1 and 2 (excluding D=1.0, 1.5, and 2.0) are thus desirable for tire noise. In the context of this application, the term "between" excludes the end boundaries of 1.0 and 2.0. However, D values between 1.5 and 2.0 yield less desirable results than D values between 1.0 and 1.5 because of-the-larger difference in lug stiffness when-the D value is between 1.5 and 2.0.

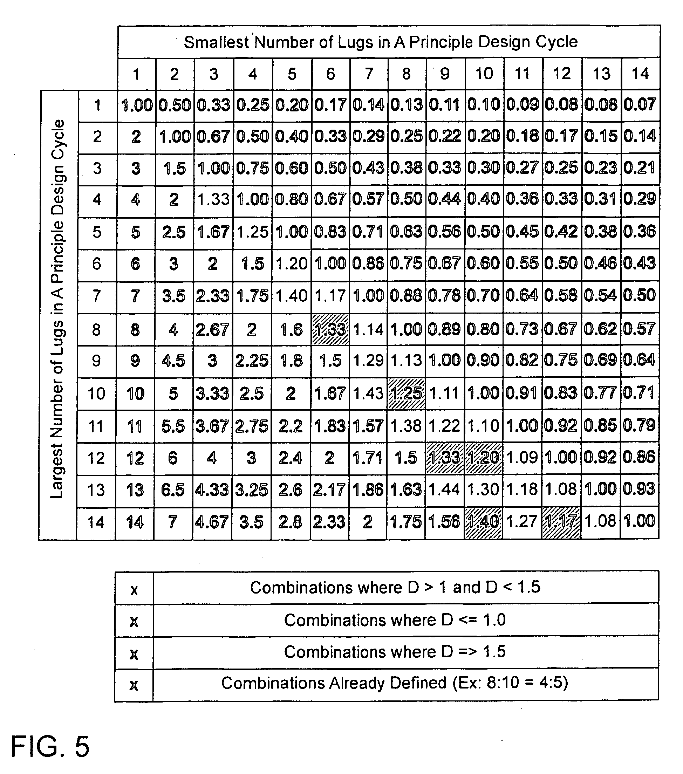

The chart of FIG. 5 is used define design parameters. The minimum number of lugs in the fundamental design cycle is arranged horizontally and the maximum number of lugs is arranged vertically. The D value for each combination is calculated in the cells of the chart.

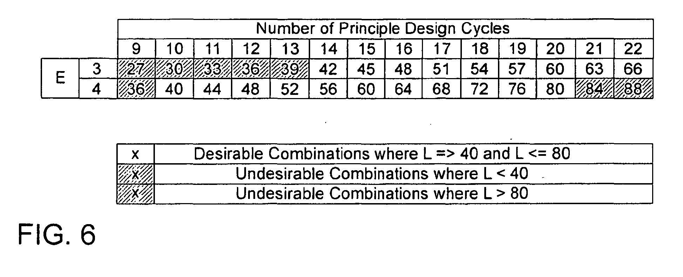

For each of the combinations in the chart, an additional chart may be developed to examine the balance of the number of lugs in the full pattern based on the number of fundamental design cycles. For the purpose of providing an example, the ratio (m) of 4 small lugs to 3 large lugs (D=1.33) is examined in the chart of FIG. 6. From this chart, it can be seen that the desirable number of lugs is achieved by using 14 to 20 fundamental design cycles because the total numbers of lugs in each rib fall within the desirable design parameters discussed above. With 14 fundamental pitches (k=14), there are 42 and 56 lugs in the two ribs with a differential of 14 pitches between ribs and for P=20, there are 60 and 80 lugs in the two ribs with a differential of 20 pitches. The difference (Δ) in number of pitches is defined by: Δ= P*(mₘₐₓ - mₘᵢₙ). As this difference Δ increases, the variation in lug stiffness increases. An increased number of lugs in a tire tread design provides for improved performance in the snow or wet weather conditions as well as reducing the impact energy at the tire-road interface resulting in lower noise amplitude. Reducing the number of lugs or increasing lug stiffness provides for improved dry traction in pleasant weather conditions as well as for improving the longevity of the tire. Tire treads designed according to this invention balance tire performance by having tire features for both dry traction and inclement weather.

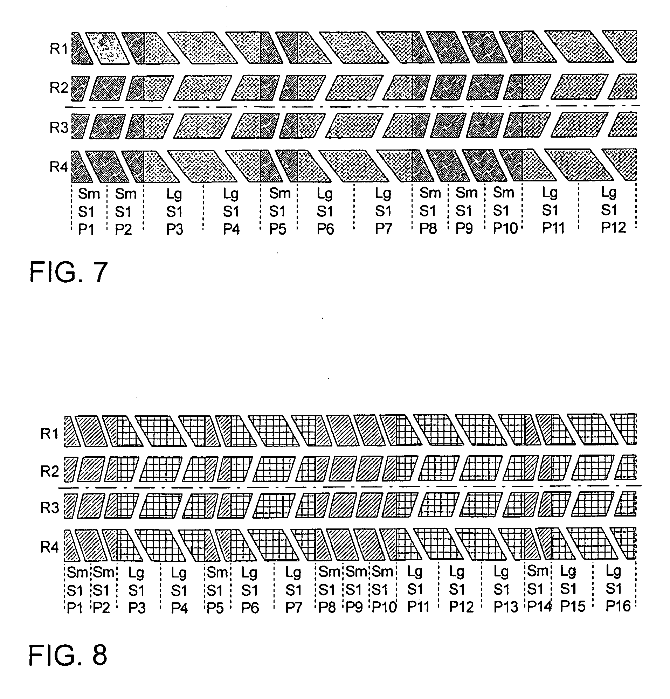

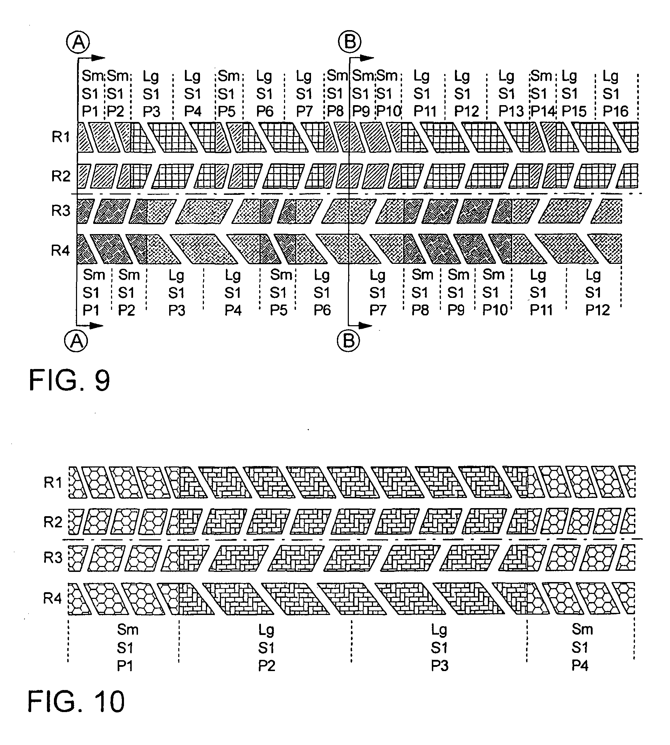

Figs. 7 and 8 depict two different exemplary tread patterns having different properties that combine to create the tire tread pattern of FIG. 9 as the upper portion of the tread of FIG. 8 bisected about the tire equator and the lower portion of the tread of FIG. 7 bisected about the tire equator. The tread of FIG. 7 has fewer lugs while the tread pattern of FIG. 8 has more lugs when disposed about the circumference of the tire. FIG. 9 depicts a pattern having the top two ribs (R1 and R2) having the configuration of FIG. 8 with the bottom two ribs (R3 and R4) having the configuration of FIG. 7. The tread pattern of FIG. 9 thus incorporates performance benefits from both tread patterns. In this example, D is 1.33 with 8 lugs per pitch in R1 and R2 and 6 lugs per pitch in R3 and R4. The tread pattern of FIG. 9 thus provides an example of the invention.

For two-piece, clam-shell type tire molds prevalent in the tire industry through the end of the twentieth century, the tire tread of FIG. 9 would be desirable from a tire mold manufacturing point of view. These two-piece molds are bisected circumferentially at a location near or at the tire equator. The manufacture of each piece can be accomplished independently and thus may be comprised of unrelated tread patters as shown in FIG. 9. For conventional type tire molds created by eight to as many as 100 or more tread segments as lateral sections of the tire mold from one side of the tread pattern to the other side of the tread pattern, it is desirable to have tire tread sections with a continuous boundary from one side of the tread pattern to the other side. Examples of continuous boundaries from the tire tread represented in FIG. 9 are the cross sections identified as section A-A and section B-B. A tire tread pattern constructed by this method will have at least 1 common boundary at the beginning of the tread pattern as shown in FIG. 9, section A-A. Based on the complexities of the tire tread pattern noise sequence for each of the tread patterns of the tires of Figs. 7 and 8, it is possible to have more than one common boundary as shown in FIG. 9, section B-B. The minimum number of common boundaries is therefore one and the maximum number of common boundaries is known in geometric terminology as the greatest common factor. Each repeating pattern of the FIG. 7 tire has 12 sections. The tire of FIG. 8 has 16 sections. The number twelve has six numeric factors including one, two, three, four, six and twelve. The number sixteen has five numeric factors including one, two, four, eight, and sixteen. The greatest common factor of twelve and sixteen is four. Thus it is possible to have a maximum of four common boundaries for the combined tread pattern of FIG. 9.

The fundamental pitch can be then defined as a portion of tire tread beginning at a common boundary and ending at a common boundary in which the greatest common factor on the number of lugs by ribs for each of the ribs contained within the fundamental pitch is one. A fundamental pitch for a tire as exemplified in FIG. 9 would be one in which the number of lugs in each rib is equal to the total number of lugs in any give rib divided by the greatest common factor as calculated above. For this case the number of lugs in the fundamental pitch in ribs R1 and R2 is four (16/4 = 4) and the number in ribs R3 and R4 is three (12/4 = 3).

FIG. 10 represents a tire tread pattern having the same number of lugs by rib as the tire tread pattern in FIG. 9, but comprised of four fundamental pitches wherein each fundamental pitch is a composite unit of two varying pitch sizes, a small and a large. The full tread pattern includes fundamental pitches sequentially ordered based on the requirements of the tire noise pitch sequence. Thus, the number of common pitch boundaries of the tire tread pattern of FIG. 10 is equal to the greatest common multiple of the number of lugs in each rib and is a preferred application for tires manufactured from conventional type segmented tire molds. A limitation to the design of FIG. 10 is that the variability of the lug sizing within the tire tread is reduced to the variability of the sizing of the fundamental pitch sizing. In FIG. 10, each sub-pitch length is equivalent to the fundamental pitch length. Each fundamental pitch (P) is thus sub-divided into multiple (m) sub-pitches (S). The value for m can be any integer such that m = 1, 2, 3, 4, 5, 6, etc. As the value of m increases, the number of unique sections of the mold increases. In FIG. 10, m = 1, and the number of pitch sizes (t) is 2 (small and large). The number of unique (U)-sub-pitch (S) geometries can then be expressed as the equation: U=m*t. To increase the number of unique geometries (U), either the number of sub-pitch sizes (t) or the number of fundamental pitch divisions (m) must be increased. It is typical in the art for the number of pitch sizes (t) to be between 2 and 8. A way to dramatically increase the number of unique geometries (U) is to increase m.

It is impractical to choose a value for m greater than the largest number of lugs in a fundamental pitch (4 in this ongoing example) and undesirable to choose a value for m smaller than the minimum number of lugs in a fundamental pitch (3 in this example). In order to minimize mold-manufacturing complexity, the minimum number of unique geometries is initially selected. In this invention, m should be first selected as the minimum number of lugs of the principal design cycle in any rib. If it is determined that a higher number of unique (U) segments are required for noise or other performance, m is increased until m is equal to the maximum number of lugs of the principal design cycle in any rib.

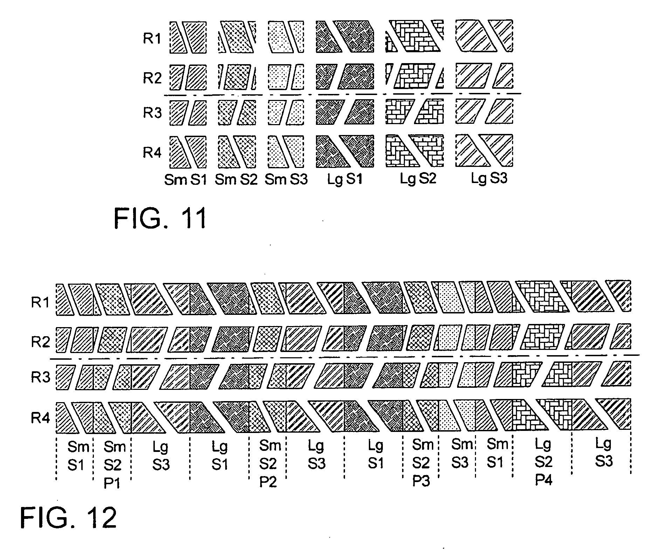

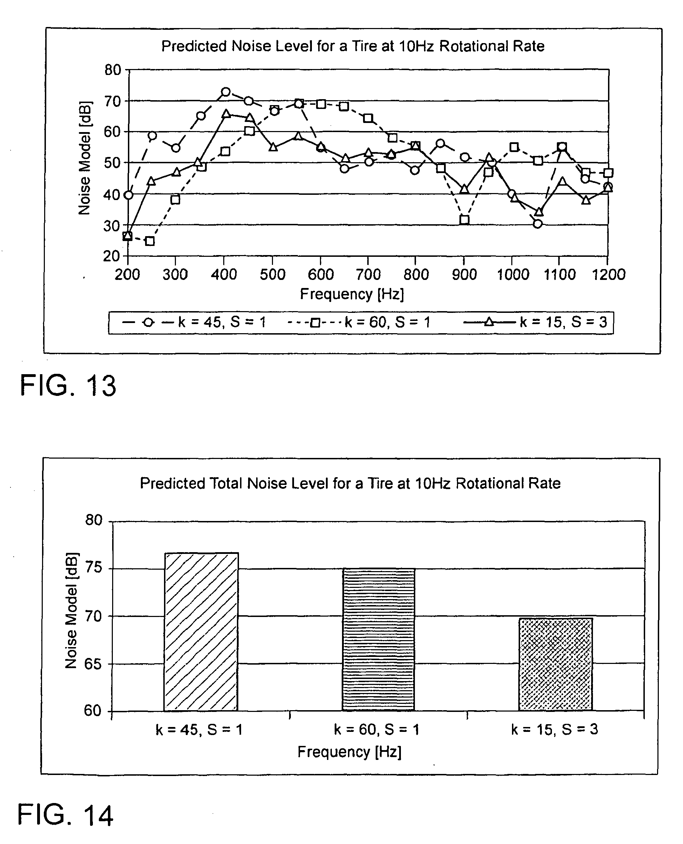

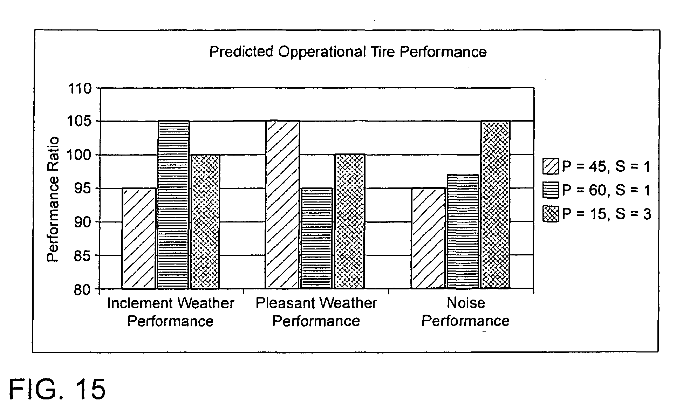

FIG. 11 depicts a set of small and large sub sections of the fundamental pitch. FIG. 12 represents a typical section of a tread pattern utilizing a 1, 2, 3, 1, 2, 3, ... repetition of the geometries and sizing selection based on the selected sizing sequence. This design has increased geometric variability with a design where ribs 1 and 2 have 4 lugs per fundamental pitch and ribs 3 and 4 have 3 lugs per fundamental pitch. Based on the chart of FIG. 6, if there were 15 fundamental pitches, ribs 1 and 2 would have 60 lugs and ribs 3 and 4 would have 45 lugs. The side of the tire with 60 lugs provides performance in inclement weather and the side with 45 pitches provides performance in agreeable weather. Tire noise is greatly reduced with the invention from the noise analysis of the above patterns. FIG. 13 shows the predicted noise frequency distribution of 3 patterns from the example. The tire with the highest noise level is the tire whose unique geometries are represented in FIG. 1 and representative pattern --example is shown in FIG. 2 where the number of lugs in each and every ribs. Thus, there are 45 fundamental pitches with only 1 sub-pitch per fundamental pitch. The tire with the second highest noise level has 60 fundamental pitches with 1 sub-pitch per fundamental pitch and has the same unique geometries as shown in FIG. 1. The tire with the lowest noise level is that of the preferred embodiment of this invention. This tire has 6 unique geometries as specified in FIG. 10 and is representative of FIG. 12. In this design, there are effectively 60 lugs on the top 2 ribs and 45 ribs on the bottom two ribs. The modeled noise level difference can be seen in FIG. 14. A chart of predicted tire performance can be seen in FIG. 15. A tire designed in the manner has been designed to have balanced performance in all weather conditions with an improvement in noise performance.

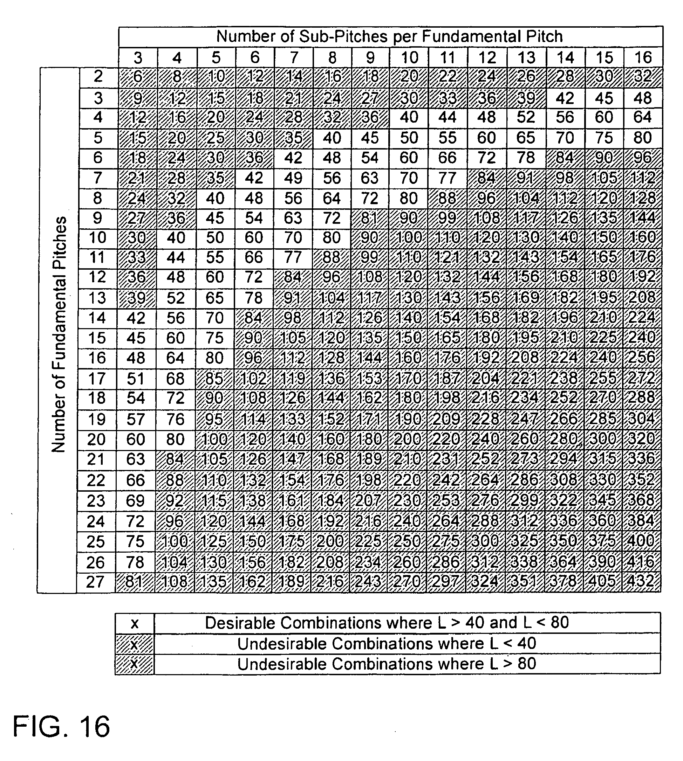

The above examples have centered about a tire with a 3:4 low to high ratio. The chart of FIG. 16 is a calculation of the number of lugs in any given rib for the conditions of 3 to 16 sub-pitches for 2 to 27 fundamental pitches. The light shaded cells are those whose number-of lugs is less than 40 and the darker shaded lugs are those whose number of lugs is greater than 80. For the ranges of this chart, the un-shaded cells represent the desirable number of lugs for certain number of sub-pitches and fundamental pitches.

A designer uses the chart of FIG. 16 to identify desirable combinations of fundamental pitches, sub-pitches, and numbers of lugs based on the designer's criteria for a tire. For example, if the tire designer knows that the tire is to have five rib groupings, the chart of FIG. 16 initially limits the designer to tread designs with 10, 8, 7, 6, 5, and 4 fundamental pitches because these are the only rows of the chart having five of more un-shaded chart boxes. The designer may then limit the potential selections by calculating the D ratio or by selecting ranges of lug numbers. In this example, the selection of 10 fundamental pitches and 5 rib groupings yield a D ratio of 2.0 (80/40). This ratio thus excludes the selection of 10 fundamental pitches. The design may-then look at the-selection of 8 fundamental pitches and find that three options are available yield D ratios of 2.00 (80/40). 1.80 (72/40), and 1.67 (80/48). The option of D = 2.00 is then excluded as per FIG. 5. As described above, the other selections may be used but should be passed over if more desirable D ratios are available. The designed may then analyze the available selections for the 7 fundamental pitches. The chart yields three possibilities of 70/42 (D= 1.67), 77/49 (D=1.57), and 77/42 (D=1.83). The data for 6 fundamental pitches yields six possibilities of D at 1.57, 1.71, 1.85, 1.5, 1.63, and 1.44. The option of D = 1.5 is then excluded as per FIG. 5. The 1.44 ratio is desirable and allows the designer to use rib groupings of 54, 60, 66, 72, and 78 lugs. Each rib grouping has 6 fundamental pitches divided into 9, 10, 11, 12, and 13 sub-pitches. The same analysis may be performed for the possibilities of 5 and 4 fundamental pitches yielding alternative possibilities.

Another way for the designer to use the design chart is to select the desired numbers of lugs in the rib groupings and then to see where the selection fits on the chart. For example, a tread designer may wish to design a 5 rib tire with a different number of lugs on each rib (thus having 5 rib groupings) and a range of lugs per rib of no fewer than 47 and no more than 79. The design chart shows that rows of at least 5 un-shaded blocks with lug numbers greater than 47 exist for 8, 7, 6, 5 and 4 fundamental pitches. At 6 fundamental pitches, the options of 72/48 (D=1.5), 78/48 D=1.63), and 78/54 (D=1.44) exist. The option of D = 1.5 is then excluded as per FIG. 5. The D ratio calculation yields the single selection of ribs with 78, 72, 66, 60, and 54 lugs. These ribs do not have to be placed in any particular order. The design chart also yields possibilities at 5 fundamental pitches (70/50 and 75/55).

This invention gives a tire designer the flexibility to create designs with balanced all season performance and improved noise performance In the foregoing description, certain terms have been used for brevity, clearness, and understanding. No unnecessary limitations are to be implied therefrom beyond the requirement of the prior art because such terms are used for descriptive purposes and are intended to be broadly construed.

## Claims

1. A method for designing a fundamental pitch (P) for a tire tread pattern having at least two circumferentially-disposed rib groupings (R) with different numbers of tread lugs (L) in each rib grouping (R); the fundamental pitch (P) being repeated about the circumference of the tire tread pattern at least three times; the method comprising the steps of:
(a) providing a tire tread pattern having x ribs of tread lugs in the direction of travel wherein x>1; the tread lugs having large tread lugs and small tread lugs; the pitch ratio being equal to the size of the large tread lugs divided by the size of the small tread lugs;
(b) grouping the ribs of tread lugs into n rib groupings (R) of ribs wherein n>1; each rib grouping (R) having the same pitch ratio;
(c) defining the number s of tread lugs in each rib of the portion of a rib grouping (R) within the fundamental pitch (P) wherein sᵢ is the number of tread lugs in the ribs of rib grouping (R) i; wherein i is an integer greater than or equal to 1 and less than or equal to n; and
(d) defining s such that the greatest common factor of sᵢ through sₙ is 1.

2. The method of claim 1, further comprising the step of limiting the ratio of sₙ to s₁ to a number between 1.0 and 2.0 but excluding 1.5.

3. The method of claim 1, further comprising the step of limiting the ratio of sₙ to s₁ to a number between 1.0 and 1.5.

4. The method of any one of claims 1-3, further comprising the step of
selecting k fundamental pitches (P) with the lowest number of tread lugs in any rib grouping (R) being k*s₁ >39 and the largest number of tread lugs in any rib grouping (R) being k*sₙ < 81; the number k being at least 3 and no more than 26.

5. The method of claim 4, further comprising the step of limiting the ratio of k*sₙ to k*s₁ to a number between 1.0 and 2.0 but excluding 1.5.

6. The method of claim 4, further comprising the step of limiting the ratio of k*sₙ to k*s₁ to a number between 1.0 and 1.5.

7. The method of any one of claims 4-6, further comprising the step of maximizing the number of fundamental pitches (P) and minimizing a number of sub-pitches (S) within the fundamental pitches (P).

8. The method of any one of claims 4-7, further comprising the step of varying the physical length of the fundamental pitch (P) about the circumference of the tire to form a tire noise pitch sequence.

9. The method of any one of claims 4-8, further comprising the steps of subdividing the fundament pitch into m sub-pitches (S) and varying the physical length of the sub-pitches (S) about the circumference of the tire to form a tire noise pitch sequence.

10. A pneumatic tire comprising:
a body defining a tread pattern made up of a plurality of tread lugs that include large tread lugs and small tread lugs; the pitch ratio being equal to the size of the large tread lugs divided by the size of the small tread lugs; the tread pattern having a plurality of circumferential rib groupings; each rib grouping (R) having the same pitch ratio;
each rib grouping (R) having the same number, k, of fundamental pitches (P); each fundamental pitch (P) being designed by the method of any one of claims 1-9 extending across all of the rib groupings (R); the number k being at least 3 and no more than 26;
each rib grouping (R) having a different number, n, of tread lugs; one of the rib groupings (R) having a minimum number of lugs and one of the rib groupings (R) having a maximum number of lugs; and
the ratio of the maximum number of lugs to the minimum number of lugs being greater than 1.0 and less than 2.0 but excluding 1.5.

11. The tire of claim 10, wherein the ratio is greater than 1.0 and less than 1.5.

12. The tire of claim 10 or claim 11, wherein the maximum number of lugs in any rib grouping (R) is 80 or less and wherein the smallest number of lugs in any rib grouping (R) is 40 or more.

13. The tire of any one of claims 10-12, wherein the tread pattern has a central rib grouping, an inner rib grouping, and an outer rib grouping.

14. The tire of claim 13, wherein the central rib grouping has more lugs than either of the inner and outer rib groupings.

15. The tire of claim 13, wherein the central rib grouping has fewer lugs than either of the inner and outer rib groupings.

16. The tire of any one of claims 10-15, wherein the tread pattern has an inner rib grouping and an outer rib grouping disposed with respect to a preferred rotational direction of the tire.

17. The tire of claim 16, wherein the inner rib grouping has more lugs than the outer rib grouping.

18. The tire of claim 16, wherein the outer rib grouping has more lugs than the inner rib grouping.

## Patentansprüche

1. Verfahren zum Konzipieren eines Grund-Pitches (P) für ein Reifenprofil mit mindestens zwei umfänglich angeordneten Rippengruppierungen (R) mit verschiedenen Zahlen von Profilstollen (L) in jeder Rippengruppierung (R); wobei der Grund-Pitch (P) um den Umfang des Reifenprofils mindestens dreimal wiederholt wird; wobei das Verfahren die folgenden Schritte umfasst:
(a) Bereitstellen eines Reifenprofils mit x Rippen von Profilstollen in der Laufrichtung, wobei > 1; wobei die Profilstollen große Profilstollen und kleine Profilstollen aufweisen; das Pitch-Verhältnis gleich der Größe der großen Profilstollen- geteilt durch die Größe der kleinen Profilstollen ist;
(b) Gruppieren der Rippen von Profilstollen zu n Gruppierungen (R) von Rippen, wobei n > 1; wobei jede Rippengruppierung (R) das gleiche Pitch-Verhältnis aufweist;
(c) Definieren der Zahl s von Profilstollen in jeder Rippe des Abschnitts einer Rippengruppierung (R) innerhalb des Grund-Pitches (P), wobei sᵢ die Zahl von Profilstollen in den Rippen der Rippengruppierung (R)i ist; wobei i eine ganze Zahl größer oder gleich 1 und kleiner oder gleich n ist; und
(d) derartiges Definieren von s, dass der größte gemeinsame Faktor von s₁ bis sₙ 1 ist.

2. Verfahren nach Anspruch 1, ferner umfassend den Schritt des Begrenzens des Verhältnisses von sₙ zu s₁ auf eine Zahl zwischen 1,0 und 2,0, aber unter Ausschluss von 1,5.

3. Verfahren nach Anspruch 1, ferner umfassend den Schritt des Begrenzens des Verhältnisses von sₙ zu s₁ auf eine Zahl zwischen 1,0 und 1,5.

4. Verfahren nach einem der Ansprüche 1 bis 3, ferner umfassend den Schritt des Auswählens von k Grund-Pitches (P), wobei die niedrigste Zahl von Profilstollen in jeder Rippengruppierung (R) k*s₁ > 39 ist, und die größte Zahl von Profilstollen in jeder Rippengruppierung (R) k*sₙ < 81 ist; wobei die Zahl k mindestens 3 und nicht mehr als 26 ist.

5. Verfahren nach Anspruch 4, ferner umfassend den Schritt des Begrenzens des Verhältnisses von k*sₙ zu k*s₁ auf eine Zahl zwischen 1,0 und 2,0, aber unter Ausschluss von 1,5.

6. Verfahren nach Anspruch 4, ferner umfassend den Schritt des Begrenzens des Verhältnisses von k*sₙ zu k*s₁ auf eine Zahl zwischen 1,0 und 1,5.

7. Verfahren nach einem der Ansprüche 4 bis 6, ferner umfassend den Schritt des Maximierens der Zahl von Grund-Pitches (P) und Minimieren einer Zahl von Teil-Pitches (S) innerhalb der Grund-Pitches (P).

8. Verfahren nach einem der Ansprüche 4 bis 7, ferner umfassend den Schritt des Änderns der physikalischen Länge des Grund-Pitches (P) um den Umfang des Reifens, um eine Reifengeräusch-Pitch-Folge zu bilden.

9. Verfahren nach einem der Ansprüche 4 bis 8, ferner umfassend den Schritt des Unterteilens des Grund-Pitches (P) in m Teil-Pitches (S) und Ändern der physikalischen Länge der Teil-Pitches (S) um den Umfang des Reifens, um eine Reifengeräusch-Pitch-Folge zu bilden.

10. Luftreifen, umfassend:
einen Körper, der ein Reifenprofil definiert, das aus einer Mehrzahl von Profilstollen besteht, die große Profilstollen und kleine Profilstollen aufweisen; wobei das Pitch-Verhältnis gleich der Größe der großen Profilstollen geteilt durch die Größe der kleinen Profilstollen ist; das Reifenprofil eine Mehrzahl von umfänglichen Rippengruppierungen aufweist; jede Rippengruppierung (R) das gleiche Pitch-Verhältnis aufweist;
jede Rippengruppierung (R) die gleiche Zahl, k, von Grund-Pitches (P) aufweist (P); jeder Grund-Pitch (P) durch das Verfahren nach einem der Ansprüche 1 bis 9 konzipiert ist und sich über alle der Rippengruppierungen (R) erstreckt; die Zahl k mindestens 3 und nicht mehr als 26 ist;
jede Rippengruppierung (R) eine verschiedene Zahl, n, von Profilstollen aufweist; eine der Rippengruppierungen (R) eine minimale Zahl von Stollen aufweist, und eine der Rippengruppierungen
(R) eine maximale Zahl von Stollen aufweist; und
das Verhältnis der maximalen Zahl von Stollen zur minimalen Zahl von Stollen größer als 1,0 und kleiner als 2,0, aber unter Ausschluss von 1,5, ist.

11. Reifen nach Anspruch 10, wobei das Verhältnis größer als 1,0 und kleiner als 1,5 ist.

12. Reifen nach Anspruch 10 oder 11, wobei die maximale Zahl von Stollen in jeder Rippengruppierung (R) 80 oder weniger ist, und wobei die kleinste Zahl von Stollen in jeder Rippengruppierung (R) 40 oder mehr ist.

13. Reifen nach Anspruch 10 bis 12, wobei das Reifenprofil eine mittlere Rippengruppierung, eine innere Rippengruppierung und eine äußere Rippengruppierung aufweist.

14. Reifen nach Anspruch 13, wobei die mittlere Rippengruppierung mehr Stollen als eine von den inneren und äußeren Rippengruppierungen aufweist.

15. Reifen nach Anspruch 13, wobei die mittlere Rippengruppierung weniger Stollen als eine von den inneren und äußeren Rippengruppierungen aufweist.

16. Reifen nach einem der Ansprüche 10 bis 15, wobei das Reifenprofil eine innere Rippengruppierung und eine äußere Rippengruppierung aufweist, die in Bezug auf eine bevorzugte Drehrichtung des Reifens angeordnet sind.

17. Reifen nach Anspruch 16, wobei die innere Rippengruppierung mehr Stollen als die äußere Rippengruppierung aufweist.

18. Reifen nach Anspruch 16, wobei die äußere Rippengruppierung mehr Stollen als die innere Rippengruppierung aufweist.

## Revendications

1. Procédé de conception du pas fondamental (P) pour une sculpture de bande de roulement de pneu ayant au moins deux groupements de nervures disposées de manière circonférentielle (R) avec différents nombres de pavés de bande de roulement (L) dans chaque groupement de nervures (R) ; le pas fondamental (P) étant répété autour de la circonférence de la sculpture de bande de roulement de pneu au moins trois fois ; le procédé comprenant les étapes de :
(a) disposer une sculpture de bande de roulement de pneu ayant x nervures de pavés de bande de roulement dans la direction de déplacement, où x > 1 ; les pavés de bande de roulement ayant de grands pavés de bande de roulement et de petits pavés de bande de roulement ; le rapport de pas étant égal à la dimension des grands pavés de bande de roulement divisée par la dimension des petits pavés de bande de roulement ;
(b) grouper les nervures de pavés de bande de roulement en n groupements de nervures (R) de nervures, où n > 1 ; chaque groupement de nervures (R) ayant le même rapport de pas ;
(c) définir le nombre s de pavés de bande de roulement dans chaque nervure de la partie d'un groupement de nervures (R) dans le pas fondamental (P), sᵢ étant le nombre de pavés de bande de roulement dans les nervures de groupement de nervures (R)i ; i étant un nombre entier supérieur ou égal à 1 et inférieur ou égal à n ; et
(d) définir s de telle sorte que le plus grand facteur commun de s₁ à sₙ est 1.

2. Procédé selon la revendication 1, comprenant en outre l'étape de limitation du rapport de sₙ à s₁ à un nombre compris entre 1,0 et 2,0 mais à l'exclusion de 1,5.

3. Procédé selon la revendication 1, comprenant en outre l'étape de limitation du rapport de sₙ à s₁ à un nombre compris entre 1,0 et 1,5.

4. Procédé selon l'une quelconque des revendications 1 à 3, comprenant en outre l'étape de :
sélection de k pas fondamentaux (P) avec le plus petit nombre de pavés de bande de roulement dans tout groupement de nervures (R) qui est k*s₁ > 39 et le plus grand nombre de pavés de bande de roulement dans tout groupement de nervures (R) qui est k*sₙ < 81 ; le nombre k étant au moins 3 et pas plus de 26.

5. Procédé selon la revendication 4, comprenant en outre l'étape de limitation du rapport de k*sₙ à k*s₁ à un nombre compris entre 1,0 et 2,0 mais à l'exclusion de 1,5.

6. Procédé selon la revendication 4, comprenant en outre l'étape de limitation du rapport de k*sₙ à k*s₁ à un nombre entre 1,0 et 1,5.

7. Procédé selon l'une quelconque des revendications 4 à 6, comprenant en outre l'étape de maximisation du nombre de pas fondamentaux (P) et de minimisation d'un nombre de sous-pas (S) à l'intérieur des pas fondamentaux (P).

8. Procédé selon l'une quelconque des revendications 4 à 7, comprenant en outre l'étape de variation de la longueur physique du pas fondamental (P) autour de la circonférence du pneu pour former une séquence de pas de bruit de pneu.

9. Procédé selon l'une quelconque des revendications 4 à 8, comprenant en outre les étapes de subdivision du pas fondamental en m sous-pas (S) et de variation de la longueur physique des sous-pas (S) autour de la circonférence du pneu pour former une séquence de pas de bruit de pneu.

10. Pneumatique comprenant :
un corps définissant une sculpture de bande de roulement faite d'une pluralité de pavés de bande de roulement qui comprennent de grands pavés de bande de roulement et de petits pavés de bande de roulement ; le rapport de pas étant égal à la dimension des grands pavés de bande de roulement divisée par la dimension des petits pavés de bande de roulement ; la sculpture de bande de roulement ayant une pluralité de groupements de nervures circonférentielles ; chaque groupement de nervures (R) ayant le même rapport de pas ;
chaque groupement de nervures (R) ayant le même nombre, k, de pas fondamentaux (P) ; chaque pas fondamental (P) étant conçu par le procédé selon l'une quelconque des revendications 1 à 9 s'étendant à travers tous les groupements de nervures (R) ; le nombre k étant au moins 3 et pas plus de 26 ;
chaque groupement de nervures (R) ayant un nombre différent, n, de pavés de bande de roulement ; l'un des groupements de nervures (R) ayant un nombre minimal de pavés et l'un des groupements de nervures (R) ayant un nombre maximal de pavés ; et
le rapport du nombre maximal de pavés au nombre minimal de pavés étant supérieur à 1,0 et inférieur à 2,0 mais à l'exclusion de 1,5.

11. Pneu selon la revendication 10, dans lequel le rapport est supérieur à 1,0 et inférieur à 1,5.

12. Pneu selon l'une des revendications 10 ou 11, dans lequel le nombre maximal de pavés dans tout groupement de nervures (R) est 80 ou moins et dans lequel le plus petit nombre de pavés dans tout groupement de nervures (R) est 40 ou plus.

13. Pneu selon l'une quelconque des revendications 10 à 12, dans lequel la sculpture de bande de roulement a un groupement de nervures central, un groupement de nervures interne et un groupement de nervures externe.

14. Pneu selon la revendication 13, dans lequel le groupement de nervures central a plus de pavés que l'un ou l'autre des groupements de nervures interne et externe.

15. Pneu selon la revendication 13, dans .lequel le groupement de nervures central a moins de pavés que l'un ou l'autre des groupements de nervures interne et externe.

16. Pneu selon l'une quelconque des revendications 10 à 15, dans lequel la sculpture de bande de roulement a un groupement de nervures interne et un groupement de nervures externe disposés par rapport à une direction de rotation préférée du pneu.

17. Pneu selon la revendication 16, dans lequel le groupement de nervures interne a plus de pavés que le groupement de nervures externe.

18. Pneu selon la revendication 16, dans lequel le groupement de nervures externe a plus de pavés que le groupement de nervures interne.
